# EUROPEAN PATENT SPECIFICATION

(11) **EP 4 395 371 B1**
(45) Date of publication and mention of the grant of the patent: **17.09.2025**
(21) Application number: 21958855.5
(22) Date of filing: 30.09.2021
(51) Int. Cl.: H04L 5/00, H04W 4/06, H04W 88/02

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(43) Date of publication of application: 03.07.2024
(73) Proprietor: GUANGDONG OPPO MOBILE TELECOMMUNICATIONS CORP., LTD., Dongguan, Guangdong 523860 (CN)
(72) Inventor: MA, Teng, Dongguan, Guangdong 523860 (CN); ZHANG, Shichang, Dongguan, Guangdong 523860 (CN); ZHAO, Zhenshan, Dongguan, Guangdong 523860 (CN); LIN, Huei-ming, Taipei 111, Taiwan (CN)
(74) Representative: Taor, Simon Edward William
(86) International application number: PCT/CN2021/122100
(87) International publication number: WO 2023/050277

(56) References cited:
- WO-A1-2021/139747
- CN-A- 111 566 972
- CN-A- 113 316 951
- US-A1- 2020 296 697
- QUALCOMM INCORPORATED: "View on group scheduling for Multicast RRC_CONNECTED UEs", vol. RAN WG1, no. e-Meeting; 20210125 - 20210205, 19 January 2021 (2021-01-19), XP051971652, Retrieved from the Internet <URL:https://ftp.3gpp.org/tsg_ran/WG1_RL1/TSGR1_104-e/Docs/R1-2101487.zip R1-2101487_NR Multicast group scheduling for CONN_v1.doc> [retrieved on 20210119]
- MODERATOR (CMCC): "Summary#8 on mechanisms to support group scheduling for RRC_CONNECTED UEs for NR MBS", vol. RAN WG1, no. e-Meeting; 20210816 - 20210827, 27 August 2021 (2021-08-27), XP052042719, Retrieved from the Internet <URL:https://ftp.3gpp.org/tsg_ran/WG1_RL1/TSGR1_106-e/Docs/R1-2108574.zip R1-2108574.docx> [retrieved on 20210827]
- ERICSSON: "Mechanisms to support MBS group scheduling for RRC_CONNECTED UEs", 3GPP DRAFT; R1-2108170, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210810 - 20210827, 6 August 2021 (2021-08-06), Mobile Competence Centre ; 650, route des Lucioles ; F-06921 Sophia-Antipolis Cedex ; France , XP052038851

## Description

### TECHNICAL FIELD

The present disclosure relates to the technical field of communications, and more particularly to a method for communication, an apparatus for communication, and a chip.

### BACKGROUND

With the development of communication technologies, a multicast broadcast service (MBS) is introduced into some communication systems, in order to realize high-rate multimedia service broadcast and multicast. However, it is not clear how to communicate after the MBS is introduced.

QUALCOMM INCORPORATED: "View on group scheduling for Multicast RRC_CONNECTED UEs", 3GPP DRAFT; R1-2101487, discusses various aspects related to group scheduling for NR multicast RRC_CONNECTED UEs.

MODERATOR (CMCC): "Summary #8 on mechanisms to support group scheduling for RRC_CONNECTED UEs for NR MBS", 3GPP DRAFT; R1-2108574, summaries the related issues and proposals based on the contributions submitted in RAN1#106-e.

### SUMMARY

The present disclosure provides a method for communication, an apparatus for communication, and a chip, which can improve efficiency of the communication.

In a first aspect, a method for communication is provided as claimed in independent claim 1.

In a second aspect, an apparatus for communication is provided as claimed in independent claim 7.

In a third aspect, a chip is provided as claimed in independent claim 13.

In the embodiments of the present disclosure, when the terminal device determines that the first PDCCH is the GC-PDCCH, the terminal device can directly determine that data carried on the first PDSCH scheduled by the first PDCCH is the new multicast data initially transmitted. That is to say, the terminal device can determine, without considering a new data indicator (NDI) carried on the first PDCCH, that the current data (i.e., the data transmitted through the first PDSCH) is the new MBS data initially transmitted, thereby improving the efficiency of the communication.

### BRIEF DESCRIPTION OF THE DRAWINGS

FIG. 1 is an example diagram of a wireless communication system to which embodiments of the present disclosure are applied.
FIG. 2 is a diagram of several scheduling modes of MBS.
FIG. 3 is a diagram for scheduling transmission of downlink data according to an embodiment of the present disclosure.
FIG. 4 is a flowchart of a method for communication according to an embodiment of the present disclosure.
FIG. 5 is a diagram for scheduling transmission of downlink data according to an embodiment of the present disclosure.
FIG. 6 is a diagram for scheduling transmission of downlink data according to another embodiment of the present disclosure.
FIG. 7 is a structural diagram of an apparatus for communication according to an embodiment of the present disclosure.
FIG. 8 is a structural diagram of an apparatus according to the present disclosure.

### DETAILED DESCRIPTION

The technical solutions in present disclosure will be described in conjunction with the accompanying drawings.

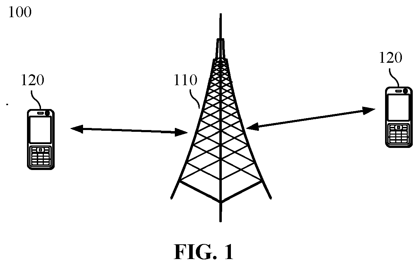

FIG. 1 is a wireless communication system 100 to which the embodiments of the present disclosure are applied. The wireless communication system 100 may include a network device 110 and user equipment (UE) 120. The network device 110 may communicate with the UE 120. The network device 110 may provide communication coverage for a particular geographic area and may communicate with the UE 120 located within the coverage area. The UE 120 may access a network (e.g., a wireless network) through the network device 110.

FIG. 1 exemplarily illustrates one network device and two UEs. In an embodiment, the wireless communication system 100 may include multiple network devices and other numbers of terminal devices are included within the coverage of each network device, which are not limited by the embodiments of the present disclosure. In an embodiment, the wireless communication system 100 may also include other network entities, such as network controllers, mobility management entities and the like, which are not limited by the embodiments of the present disclosure.

It should be understood that the technical solutions of the embodiments of the present disclosure may be applied to various communication systems, such as: a 5th generation (5G) system or new radio (NR), a long term evolution (LTE) system, a LTE frequency division duplex (FDD) system, a LTE time division duplex (TDD) system, and the like. The technical solutions provided by the present disclosure can also be applied to future communication systems, such as a sixth generation mobile communication system, a satellite communication system, etc.

The UE in the embodiments of the present disclosure may also be referred to as a terminal device, an access terminal, a subscriber unit, a subscriber station, a mobile platform, a mobile station (MS), a mobile terminal (MT), a remote station, a remote terminal, a mobile device, a user terminal, a terminal, a wireless communication device, a user agent or a user apparatus. The UE in the embodiments of the present disclosure may be a device that provides voice and/or data connectivity to a user, and may be used to connect human beings, objects and machines, such as a handheld device, a vehicle-mounted device or the like that has a wireless connection function. The UE in the embodiments of the present disclosure may be a mobile phone, a Pad, a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in a smart city, and a wireless terminal in a smart home, etc. In an embodiment, the UE may be used as a base station. For example, the UE may act as a scheduling entity that provides sidelink signals between UEs in V2X or D2D or the like. For example, a cellular phone and a car communicate with each other using a sidelink signal. The cellular phone communicates with a smart home device without relaying a communication signal through a base station.

The network device in the embodiments of the present disclosure may be a device for communicating with the UE. The network device may also be referred to as an access network device or a radio access network device. For example, the network device may be a base station. The network device in the embodiments of the present disclosure may refer to a radio access network (RAN) node (or device) that connects the UE to a wireless network. Broadly speaking, the base station can cover or replace the following devices such as a Node B, an evolved NodeB (eNB), a next generation NodeB (gNB), a relay station, an access point, a transmitting and receiving point (TRP), a transmitting point (TP), a main station MeNB, a secondary station SeNB, a multi-standard wireless (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), a positioning node and the like. The base station may be a macro base station, a micro base station, a relay node, a donor node or the like, or a combination thereof.

In some embodiments, the network device may be fixed or mobile. For example, a helicopter or unmanned aerial vehicle may be configured to act as a mobile network device, and one or more cells may be moved depending on the location of the mobile network device. In other examples, a helicopter or unmanned aerial vehicle may be configured to function as a device for communicating with another network device. In some embodiments, the network device may refer to the CU or the DU, or the network device may include the CU and the DU, or the network device may also include the AAU.

It should be understood that the network device may be deployed on land including indoors or outdoors, and may be hand-held or vehicle-mounted. The network device can also be deployed on the water surface. The network device can also be deployed on airplanes, balloons and satellites in the air. The scenario in which the network device is located is not limited in the embodiments of the present disclosure.

It should also be understood that all or part of the functions of the network device and UE in present disclosure may also be implemented by software functionality running on hardware or by virtualization functionality instantiated on a platform (e.g., a cloud platform).

Certain communication systems introduce a multicast broadcast service (MBS) to enable higher rate of multimedia service broadcast and multicast. In the embodiments of the present disclosure, the MBS may also be referred to as groupcast or multicast, and no distinction is made on the groupcast and multicast in the description in the subsequent embodiments.

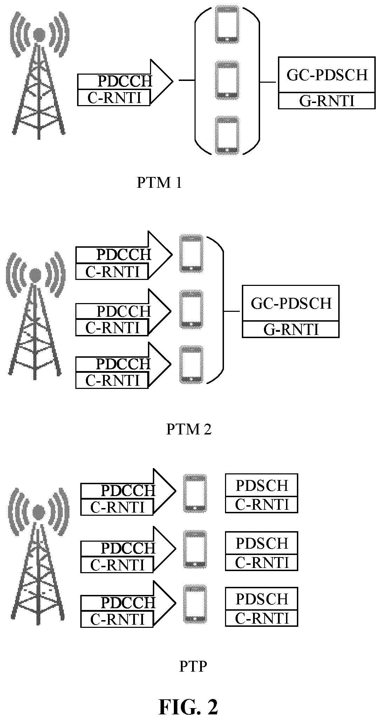

According to the conclusion of the current discussion, the MBS can be scheduled in three modes: point to multipoint (PTM) 1, PTM2 and point to point (PTP). The PTM1 and the PTP are currently supported. These three scheduling modes are illustrated in FIG. 2 as follows.

### PTM1:

As illustrated in FIG. 2, for multiple UEs of the same group in a connected state, a group-common physical downlink shared channel (GC-PDSCH) is scheduled by a group-common physical downlink control channel (GC-PDCCH), a cyclic redundancy check (CRC) of the group-common PDCCH is scrambled with a group-common radio network temporary identifier (G-RNTI), and the group-common PDSCH is scrambled with the same group-common RNTI.

The group-common PDCCH/PDSCH refers to the PDCCH/PDSCH sent by the base station on a set of time-frequency resources, and the group-common PDCCH/PDSCH can be received by multiple UEs of the same group.

### PTM2:

As illustrated in FIG. 2, for multiple UEs of the same group in a connected state, a group-common PDSCH is scheduled by a UE-specific PDCCH for each UE. A CRC of the UE-specific PDCCH is scrambled with a UE-specific cell RNTI (i.e., C-RNTI), and the group-common PDSCH is scrambled with a group-common RNTI.

### PTP:

As illustrated in FIG. 2, for UEs in a connected state, a UE-specific PDSCH is scheduled for each UE by a UE-specific PDCCH. A CRC of the UE-specific PDCCH is scrambled with a UE-specific cell RNTI (i.e., C-RNTI), and the UE-specific PDSCH is scrambled with the UE-specific cell RNTI (i.e., C-RNTI).

The PTM scheduling modes mentioned in the subsequent embodiments of the present disclosure all refer to the PTM 1.

According to the conclusion of current discussion, a retransmission mechanism of the MBS based on hybrid automatic repeat request acknowledgement (HARQ-ACK) feedback in a connected state supports the following modes.
(1) Initial transmission (or referred to as new transmission) is PTM, and retransmission is PTM; and
(2) Initial transmission is PTM, and retransmission is PTP.

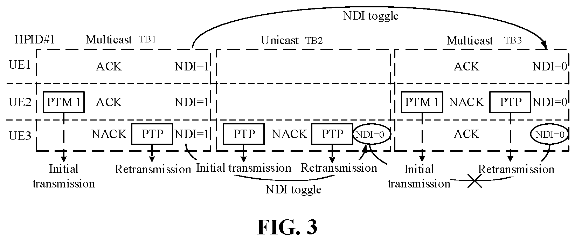

As can be seen from FIG. 3, in solutions of the related art, the retransmission of the MBS can be unicast transmission based on the PTP scheduling mode. That is, for the retransmission of the MBS, the base station transmits data to each UE. The embodiments of the present disclosure are mainly aimed at improving the mode (2), namely, the HARQ-ACK transmission mode of the MBS is: the initial transmission is PTP, and the retransmission is PTP.

According to the conclusion of current discussion, a unicast service and MBS share the HARQ process ID (HPID) of the system. There are 16 HPIDs, and serial numbers corresponding to the 16 HPIDs are 0 to 15 respectively. How to allocate the HPID is determined by the implementation of the base station. As illustrated in FIG. 3, if HPID#1 is first allocated for being used in transmission of a transport block (TB) 1 of the MBS, the base station will continue to allocate the HPID#1 for being used in transmission of a TB2 when both the initial transmission and potential retransmission of the TB1 end, and the TB2 is used for unicast transmission of the UE3 in this case. When the initial transmission and potential retransmission of the TB2 end, the base station will continue to allocate the HPID#1 for being used in the transmission of a TB3, and the TB3 is used for the transmission of the MBS in this case.

Based on both the HPID and the new data indicator (NDI), the UE determines whether transmission of the current TB is initial transmission or retransmission. For example, when a value of an NDI carried in downlink control information (DCI) corresponding to the currently received HPID#1 is 0 (i.e., NDI=0), if a value of an NDI corresponding to the previous received HPID#1 is 1 (i.e., NDI=1), it can be determined that the currently received TB is a new TB initially transmitted. In this case, the UE will clear data information of the previous TB stored in a cache, and then store information of the initial transmission of the newly received TB and the potential received retransmission of the TB into the cache for soft merging; and if the value of the NDI corresponding to the previous received HPID#1 is 0 (i.e., NDI=0), it can be determined that the currently received TB is retransmission.

In the current retransmission mechanism, when the UE receives unicast service and MBS, the use of HPID is mixed, i.e., an HPID#n can be used for both the unicast service and the MBS, and the unicast service and the MBS are time-division multiplexing (TDM). The UE needs to take both the HPID and the NDI into consideration to determine whether the currently transmitted data is initial transmission or retransmission of data corresponding to this HPID.

However, the existing technology is mainly based on unicast design. If the transmission of MBS data is introduced, there will be some problems based on the HARQ retransmission mechanism of the existing technology, which will be described in detail with reference to FIG. 3 below.

As illustrated in FIG. 3, both groupcast/multicast and unicast schedule transmission of downlink data by using the TDM mode, and the use of the HPID is dynamically shared between groupcast/multicast and unicast. Here, taking HPID#1 as an example, the HPID#1 is used for groupcast/multicast and unicast in FIG. 3.

### (1) TB1 is MBS:

For a group of UEs (taking a group of UEs including UE1, UE2 and UE3 as an example in FIG. 3), PHID #1 is used, and the base station performs group scheduling of initial transmission of the TB1 through PTM, and then decides whether to schedule retransmission based on the received ACK/NACK feedback information. If a certain UE (such as UE3) feeds back NACK, the base station can schedule retransmission of the TB1 to the UE3 through PTP. At the end of the transmission (including initial transmission and all retransmissions) of the TB1, the NDI has a state of 1.

### (2) TB2 is an unicast service:

The base station schedules unicast service TB2 to the UE3 and uses PHID#1. Since NDI=1 at the end of scheduling of the previous PTM, in order to indicate that this transmission is a new TB, the NDI is toggled, i.e., NDI=0 and both initial transmission and potential retransmissions of the TB2 remain the same NDI=0. In this case, other UEs in the MBS group have no unicast service transmission, so NDIs of other UEs (such as UE1 and UE2) remain in the state at the end of the last transmission, that is, NDI=1.

### (3) TB3 is NMS:

When the PHID#1 is used for a group of UEs, when the base station performs group scheduling of initial transmission of the TB3 through PTM, the states of NDIs of the current UE1, UE2 and UE3 are not uniform due to the existence of scheduling of transmission of the previous TB1 and TB2. In this case, the NDI state of the UE1/UE2 is 1, and the NDI state of the UE3 is 0. If the GC-PDCCH indicates that the NDI has been toggled when scheduling the TB3, then the UE1/UE2 can recognize that NDI has been toggled and know that the current TB is TB3 initially transmitted. For the UE3, compared with the previous state of the NDI corresponding to the PHID#1, the NDI of the UE3 is not toggled, so the UE3 determines that the currently transmitted TB is the TB2 retransmitted, which leads to the transmission identification error of the UE3, and the UE3 will mistakenly combine the TB2 in the cache with the latest received TB3, resulting in further errors.

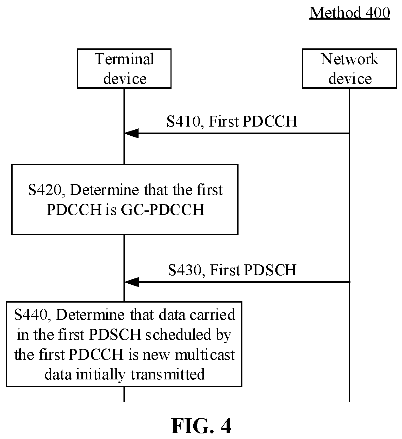

In order to solve the above technical problems, the embodiments of the present disclosure will be explained in detail with reference to FIGS. 4 to 6.

FIG. 4 is a flowchart of a method for communication according to an embodiment of the present disclosure. It should be understood that FIG. 4 illustrates steps or operations of a method for communication, but these steps or operations are only examples, and the embodiments of the present disclosure may also perform other operations or variations of the respective operations in FIG. 4, or not all of the operations need to be performed, or the operations may be performed in other orders. The method 400 illustrated in FIG. 4 may include operations S410, S420, S430, and S440 as follows:
In S410, a network device transmits a first PDCCH to a terminal device.

In an embodiment, the network device can use the transmission mode of "initial transmission is PTP and retransmission is PTP" to schedule the MBS.

In S420, the terminal device determines that the first PDCCH is a GC-PDCCH.

The terminal device may be one of a group of terminal devices (i.e., multiple terminal devices). The first PDCCH may be the GC-PDCCH, and the first PDCCH may be used to schedule data for this group of the terminal devices.

In some embodiments, the terminal device may determine that the first PDCCH is the GC-PDCCH based on first information.

In an embodiment, the first information may include at least one of: a cyclic redundancy check (CRC) of the first PDCCH being scrambled with a group-common radio network temporary identifier (G-RNTI), or an N-bit information field in the first PDCCH indicating that the first PDCCH is the GC-PDCCH, where N is a positive integer. For example, a 1-bit information field may be added into DCI carried on the first PDCCH to indicate whether the first PDCCH is the GC-PDCCH or a PDCCH of unicast service (i.e., a UE-specific PDCCH). Alternatively, other existing bit information fields in the DCI may be used to indicate whether the first PDCCH is the GC-PDCCH or a PDCCH of unicast service.

In some embodiments, the terminal device may determine that the first PDCCH is the GC-PDCCH based on second information.

In an embodiment, the second information may include at least one of: a cyclic redundancy check (CRC) of the first PDCCH being scrambled with a group-common radio network temporary identifier (G-RNTI), a first hybrid automatic repeat request (HARQ) process identifier (HPID) carried on the first PDCCH, or a first new data indicator (NDI) carried on the first PDCCH. For example, the DCI carried on the first PDCCH may include a first HPID and a first NDI.

In some embodiments, after determining that the first PDCCH is the GC-PDCCH, the terminal device may clear data corresponding to a second HPID stored in a cache to store data of the first PDSCH and/or retransmitted data (potential retransmission) of the first PDSCH. The second HPID is the same with the first HPID. In an embodiment, the second HPID may be carried on the second PDCCH. The second PDCCH may be received by the terminal device before the first PDCCH is received by the terminal device. For example, the second NDI may be included in the DCI carried on the second PDCCH.

In S430, the network device transmits a first PDSCH to the terminal device.

In an embodiment, the first PDSCH may be scheduled by the first PDCCH.

In S440, the terminal device determines that data carried on the first PDSCH scheduled by the first PDCCH is new multicast data initially transmitted.

In some embodiments, data scheduled by the group-common PDCCH may be pre-agreed to be initial transmission of new data (i.e., the group-common PDCCH only schedules initial transmission of new data), and when a certain PDCCH (e.g., the first PDCCH) is determined to be the GC-PDCCH, the data scheduled by this PDCCH may be determined to be initial transmission of new data of multicast.

For example, according to the protocol or network device configuration, the data scheduled by the group-common PDCCH can be pre-agreed to be the initial transmission of the new data. In this case, when the first PDCCH is determined as the GC-PDCCH, the data carried on the first PDSCH scheduled by the first PDCCH can be determined as the initial transmission of the new data of multicast.

In the embodiments of the present disclosure, when the terminal device determines that the first PDCCH is the GC-PDCCH, it can directly determine that the data carried on the first PDSCH scheduled by the first PDCCH is the initial transmission of the new data of the multicast, and can determine, without considering the new data indicator (NDI) carried on the first PDCCH, that the current data (i.e., the data transmitted by the first PDSCH) belongs to the initial transmission of the new MBS data, thereby improving the efficiency of the communication.

In some embodiments, the terminal device may further receive a third PDCCH after receiving the first PDCCH.

In an embodiment, the third PDCCH may be a UE-specific PDCCH, and DCI carried on the third PDCCH may include the third HPID. The third HPID is the same with the first HPID, i.e., a value of n of the third HPID#n is the same with a value of n of the first HPID#n, and n is a positive integer. For example, the third HPID is HPID#1, and the first HPID is also HPID#1. In an embodiment, the third NDI may also be included in the DCI carried on the third PDCCH.

In an embodiment, the CRC of the third PDCCH may be scrambled with the UE-specific cell radio network temporary identifier (C-RNTI).

In the embodiments of the present disclosure, the terminal device can distinguish whether the data scheduled by the third PDCCH belongs to (initial transmission of) the unicast service or (retransmission of) the MBS in the following modes, which are specified as follows.

First Mode: the terminal device can align the third NDI with the first NDI (i.e., make the third NDI the same with the first NDI).

The terminal device may compare first new data indicator (NDI) carried on the first PDCCH with an NDI of the terminal device. In an embodiment, the terminal device may further receive the second PDCCH before receiving the first PDCCH. The second HPID carried on the second PDCCH is the same with the first HPID, the second PDCCH may be a group-common PDCCH or a UE-specific PDCCH, and the DCI carried on the second PDCCH may include the second NDI. The NDI of the terminal device may be the same with the second NDI.

For example, if the first NDI is different from the NDI of the terminal device, the terminal device may toggle the NDI of the terminal device, to make the NDI of the terminal device consistent with the first NDI; and if the first NDI is the same with the NDI of the terminal device, the terminal device may keep the NDI of the terminal device unchanged.

In some embodiments, the terminal device may determine, based on the third NDI and the first NDI, whether data carried on the third PDSCH scheduled by the third PDCCH is the multicast data as retransmitted or new unicast data initially transmitted.

For example, if the third NDI is the same with the first NDI, the terminal device determines that data carried on the third PDSCH scheduled by the third PDCCH is the multicast data as retransmitted; and if the third NDI is different from the first NDI, the terminal device determines that data carried on the third PDSCH scheduled by the third PDCCH is new unicast data initially transmitted.

Second Mode: the terminal device can compare the third NDI with the second NDI, so as to determine whether the data scheduled by the third PDCCH belongs to (initial transmission of) unicast service or (retransmission of) MBS.

When the first PDCCH is the GC-PDCCH, the terminal device may not compare the first new data indicator (NDI) carried on the first PDCCH with the NDI of the terminal device, and the terminal device may not toggle the NDI of the terminal device.

In an embodiment, the terminal device may further receive the second PDCCH before receiving the first PDCCH. The second HPID carried on the second PDCCH is the same with the first HPID, the second PDCCH may be a group-common PDCCH or a UE-specific PDCCH, and the DCI carried on the second PDCCH may include the second NDI. The NDI of the terminal device may be the same with the second NDI.

In some embodiments, the terminal device may determine, based on the third NDI and the second NDI, whether the data carried on the third PDSCH scheduled by the third PDCCH is the multicast data as retransmitted or new unicast data initially transmitted.

For example, if the third NDI is the same with the second NDI carried on the second PDCCH, the terminal device determines that the data carried on the third PDSCH scheduled by the third PDCCH is the multicast data as retransmitted; and if the third NDI is different from the second NDI, the terminal device determines that the data carried on the third PDSCH scheduled by the third PDCCH is new unicast data initially transmitted.

Further, after determining that the data carried on the third PDSCH scheduled by the third PDCCH is new unicast data initially transmitted, the terminal device may also toggle the NDI of the terminal device to make the NDI of the terminal device consistent with the third NDI.

In an embodiment, the terminal device may also clear data corresponding to the first HPID stored in the cache to store data of the third PDSCH and/or retransmitted (potential retransmitted) data of the third PDSCH.

For the embodiments in the second mode, the terminal device can determine, without considering the first NDI carried on the first PDCCH, that the current data (i.e., the data transmitted through the first PDSCH) is new MBS data initially transmitted, and at the same time, the terminal device does not need to align the NDI of the terminal device with the first NDI. In this case, the first NDI does not need to indicate initial transmission of data, so an information field for the first NDI can be used to indicate other information.

In some embodiments, the information field for the first NDI may indicate one of the following: the data carried on the first PDSCH being multicast data or unicast data; enabling or disabling of hybrid automatic repeat request acknowledgement (HARQ-ACK) of the terminal device; the terminal device using an acknowledgement/negative acknowledgement (ACK/NACK) feedback mode or an NACK-only feedback mode; or the terminal device receiving multicast data using a unicast-specific bandwidth part (BWP) or a multicast-specific BWP.

In some embodiments, the information field for the first NDI may also be used to expand other information fields when the first NDI does not need to indicate initial transmission of data.

For example, the information field for the first NDI is used to expand one of the following information fields in downlink control information (DCI) carried on the first PDCCH: a frequency domain resource assignment (FDRA) information field, a time domain resource assignment (TDRA) information field, a bandwidth part (BWP) indication information field, or another information field.

In some embodiments, the information field for the first NDI may also not appear in the first PDCCH when the first NDI does not need to indicate initial transmission of data.

For example, the information field for the first NDI may not be carried on the first PDCCH.

In the embodiments of the present disclosure, the terminal device determines whether the data scheduled by the PDCCH (for example, the third PDCCH) transmitted after the group-common PDCCH is (initial transmission of) the unicast service or (retransmission of) the MBS, so that transmission identification error caused by the HDI inconsistency of multiple terminal devices can be avoided, and therefore efficiency of communication can be improved.

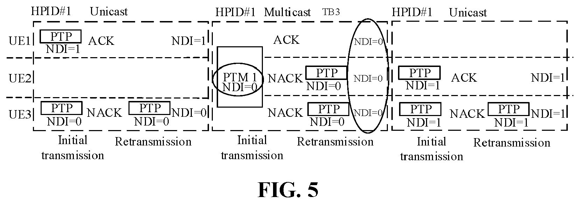

The embodiments of the first mode described above will be described in detail with reference to FIG. 5.

As illustrated in FIG. 5, UE1, UE2, and UE3 are a group of UEs that may receive a group-common PDCCH. The terminal device in the method 400 illustrated in FIG. 4 may be UE1, UE2, or UE3. The operations performed by each UE will be described with reference to FIG. 5.

For UE1:
The UE1 can receive a group-common PDCCH, a CRC of group-common PDCCH is scrambled with a G-RNTI, the group-common PDCCH is used to schedule a group-common PDSCH, and data carried on the group-common PDSCH is the TB3.

The group-common PDCCH can carry the group-common downlink control information (DCI), and the group-common DCI can contain information fields for an HPID and an NDI. As illustrated in FIG. 5, HPID=1 (which can be denoted as HPID#1) and NDI=0.

Based on at least one of the scrambling mode of the received group-common PDCCH, the HPID in the group-common DCI (carried on the group-common PDCCH), or the NDI in the group-common DCI, the UE1 can determine that data (i.e., TB3) carried on the scheduled PDSCH is new groupcast/multicast data initially transmitted.

In this case, the UE1 can adjust its NDI state based on the HPID and NDI in the group-common PDCCH. As illustrated in FIG. 5, the NDI of the UE1 is 1 (i.e., NDI=1) before the UE1 receives PTM1. After receiving the group-common PDCCH of the PTM1, the UE1 can toggle the NDI of the UE1, that is, NDI=0, and clear data stored in a cache corresponding to HPID#1.

After receiving the PTM1, if the UE1 receives PTP transmission, based on at least one of the scrambling mode of a UE-specific PDCCH in the PTP, an HPID in UE-specific DCI (carried on the UE-specific PDCCH), or NDI in the UE-specific DCI, the UE1 can determine that data carried on the scheduled PDSCH is data retransmitted or new data initially transmitted. As illustrated in FIG. 5, the UE1 feeds back ACK for the PTM1, and there is no retransmission of the PTP for the TB3, NDI=0, that is, the NDI remains unchanged. At the same time, no other unicast transmission based on the HPID#1 is received by the UE1, and the state of the NDI remains unchanged at 0.

For UE2:
The UE2 can receive a group-common PDCCH, a CRC of the group-common PDCCH is scrambled with a G-RNTI. The group-common PDCCH is used to schedule a group-common PDSCH, where data carried on the group-common PDSCH is a TB3.

The group-common PDCCH can carry group-common downlink control information (DCI), and the group-common DCI can contain information fields for an HPID and an NDI. As illustrated in FIG. 5, HPID=1 (which can be denoted as HPID#1) and NDI=0.

Based on at least one of a scrambling mode of the received group-common PDCCH, the HPID in the group-common DCI (carried on the group-common PDCCH), or the NDI in the group-common DCI, the UE2 can determine that data (i.e., TB3) carried on the scheduled PDSCH is new groupcast/multicast data initially transmitted.

In this case, the UE2 can adjust its NDI state based on the HPID and the NDI in the group-common PDCCH. As illustrated in FIG. 5, the previous NDI of the UE2 is stateless (or in any state). After receiving the group-common PDCCH of the PTM1, the NDI of the UE2 is set to 0, and the UE2 clears data stored in the cache corresponding to the HPID#1 (if there is data in the cache).

After receiving the PTM1, if the UE2 receives PTP transmission, based on at least one of the scrambling mode of a UE-specific PDCCH in the PTP, an HPID in UE-specific DCI, or an NDI in UE-specific DCI, the UE2 can determine that data carried on the scheduled PDSCH is data as retransmitted or new data initially transmitted. As illustrated in FIG. 5, the UE2 feeds back NACK, and then receives the UE-specific PDCCH, DCI carried on the UE-specific PDCCH contains HPID=1 and NDI=0 (without toggling), and thus the UE2 can determine that retransmission of the PTM1 (TB3) is carried on the PDSCH scheduled by the PDCCH.

Further, as illustrated in FIG. 5, the UE2 further receives the UE-specific PDCCH of the PTP, DCI carried on the UE-specific PDCCH contains HPID=1 and NDI=1 (with toggling), and thus the UE2 can determine that initial transmission of new data (that is, the unicast transmission) is carried on the PDSCH scheduled by the PDCCH.

In this case, the UE2 can update the NDI of UE2 (that is, the NDI corresponding to the HPID#1 of the UE2) based on the latest received DCI. That is, the UE2 can toggle the NDI of the UE2, that is, NDI=1, and clear data stored in the cache corresponding to the HPID#1.

For UE3:
The UE3 can receive a group-common PDCCH, a CRC of the group-common PDCCH is scrambled with a G-RNTI. The group-common PDCCH is used to schedule a group-common PDSCH, where data carried on the group-common PDSCH is a TB3.

The group-common PDCCH can carry group-common downlink control information (DCI), and the group-common DCI can contain information fields for an HPID and an NDI. As illustrated in FIG. 5, HPID=1 (which can be denoted as HPID#1) and NDI=0.

Based on at least one of the scrambling mode of the received group-common PDCCH, an HPID in the group-common DCI (carried on the group-common PDCCH), or an NDI in the group-common DCI, the UE3 can determine that data (i.e., TB3) carried on the scheduled PDSCH is new groupcast data initially transmitted.

In this case, the UE3 can adjust its NDI state based on the HPID and NDI in the group-common PDCCH. As illustrated in FIG. 5, the previous NDI of the UE3 is 0. After receiving the group-common PDCCH of the PTM1, the NDI of the UE3 remains unchanged and remains 0, and data stored in the cache corresponding to HPID#1 is cleared.

After receiving the PTM1, if the UE3 receives PTP transmission, based on at least one of a scrambling mode of a UE-specific PDCCH in the PTP, an HPID in a UE-specific DCI, or an NDI in the UE-specific DCI, the UE3 can determine that data carried on the scheduled PDSCH is data retransmitted or new data initially transmitted. As illustrated in FIG. 5, the UE3 feeds back NACK, and then receives the UE-specific PDCCH, DCI carried on the UE-specific PDCCH contains HPID=1 and NDI=0 (without toggling), and thus UE3 can determine that the retransmission of the PTM1 (TB3) is carried on the PDSCH scheduled by the PDCCH.

Further, as illustrated in FIG. 5, if the UE3 receives the UE-specific PDCCH of the PTP, and the DCI carried on the UE-specific PDCCH contains HPID=1 and NDI=1 (with toggling), the UE3 can determine that initial transmission of new data (that is, the unicast transmission) is carried on the PDSCH scheduled by the PDCCH.

In this case, the UE3 can update the NDI of the UE3 (that is, the NDI corresponding to the HPID#1 of UE3) based on the latest received DCI. That is, the UE3 can toggle all NDIs of the UE3, that is, NDI=1, and clear data stored in the cache corresponding to the HPID#1.

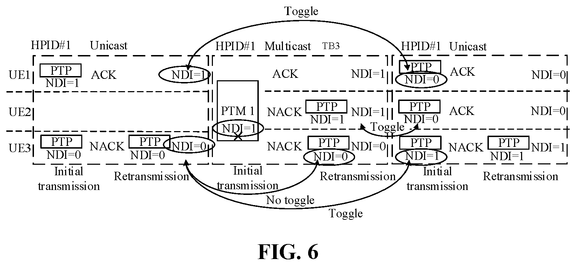

The embodiments of the above-mentioned second mode will be described in detail with reference to FIG. 6.

As illustrated in FIG. 6, UE1, UE2, and UE3 are a group of UEs that may receive group-common PDCCHs, and the terminal device in the method 400 in FIG. 4 may be UE1, UE2, or UE3. The behavior of each UE will be described with reference to FIG. 6.

For UE1:
The UE1 can receive a group-common PDCCH, a CRC of group-common PDCCH is scrambled with a G-RNTI, the group-common PDCCH is used to schedule a group-common PDSCH, and data carried on the group-common PDSCH is a TB3.

The group-common PDCCH can carry group-common downlink control information (DCI), and the group-common DCI can contain information fields for an HPID and an NDI. As illustrated in FIG. 6, HPID=1 (which can be denoted as HPID#1) and NDI=0.

Based on at least one of the scrambling mode of the received group-common PDCCH, the HPID in the group-common DCI (carried on the group-common PDCCH), or the NDI in the group-common DCI, the UE1 can determine that data (i.e., TB3) carried on the scheduled PDSCH is new groupcast data initially transmitted.

In this case, after receiving the group-common PDCCH, the UE1 may not adjust its own NDI state. As illustrated in FIG. 6, the previous NDI of the UE1 is 1 (i.e., NDI=1), and after receiving the group-common PDCCH of the PTM1, the NDI remains unchanged, that is, the NDI is kept at 1 (i.e., NDI=1), and data stored in the cache corresponding to the HPID#1 is cleared.

After receiving the PTM1, if the UE1 receives PTP transmission, based on at least one of a scrambling mode of a UE-specific PDCCH in the PTP, an HPID in a UE-specific DCI, or an NDI in the UE-specific DCI, the UE1 can determine that data carried on the scheduled PDSCH is data retransmitted or new data initially transmitted. As illustrated in FIG. 6, the UE2 feeds back ACK, and does not receive a UE-specific PDCCH. The DCI carried on the UE-specific PDCCH contains HPID=1 and NDI=1 (without toggling).

Further, as illustrated in FIG. 6, the UE1 receives the UE-specific PDCCH of the PTP, and the DCI carried on the UE-specific PDCCH contains HPID=1 and NDI=0. The NDI carried on the UE-specific PDCCH is toggled compared with the NDI (NDI=1) carried on the UE-specific PDCCH of the PTP before receiving the PTM1, and thus the UE1 can determine that initial transmission of new unicast data is carried on the PDSCH scheduled by the UE-specific PDCCH.

In this case, the UE1 can update the NDI of the UE1 (that is, the NDI corresponding to the HPID#1 of the UE1) based on the latest received DCI. That is, the UE1 can toggle the NDI of the UE1, that is, NDI=0, and clear data stored in the cache corresponding to the HPID#1.

For UE2:
The UE2 can receive a group-common PDCCH, a CRC of the group-common PDCCH is scrambled with a G-RNTI, the group-common PDCCH is used to schedule a group-common PDSCH, and data carried on group-common PDSCH is a TB3.

The group-common PDCCH can carry group-common downlink control information (DCI), and the group-common DCI can contain information fields for an HPID and an NDI. As illustrated in FIG. 6, HPID=1 (which can be denoted as HPID#1) and NDI=0.

Based on at least one of a scrambling mode of the received group-common PDCCH, an HPID in group-common DCI (carried on the group-common PDCCH), or an NDI in the group-common DCI, the UE2 can determine that data (i.e., TB3) carried on the scheduled PDSCH is new groupcast data initially transmitted.

In this case, after receiving the group-common PDCCH, the UE2 may not adjust its own NDI state. As illustrated in FIG. 6, the previous NDI of UE2 is stateless (or in any state). After receiving the group-common PDCCH of the PTM1, the NDI is set to 0, and data stored in the cache corresponding to HPID#1 is cleared (if there is data in the cache).

After receiving the PTM1, if the UE2 receives PTP transmission, based on at least one of a scrambling mode of a UE-specific PDCCH in the PTP, an HPID in a UE-specific DCI, or an NDI in UE-specific DCI, the UE2 can determine that data carried on the scheduled PDSCH is data retransmitted or new data initially transmitted. As illustrated in FIG. 6, the UE2 feeds back NACK, and then receives the UE-specific PDCCH. The DCI carried on the UE-specific PDCCH contains HPID=1 and NDI=1. Through comparison, both the NDI=1 carried on the UE-specific PDCCH and the NDI=1 in the group-common PDCCH of the PTM1 received by the UE2 are 1. That is to say, the NDI is not toggled. Thus, the UE2 can determine that retransmission of the PTM1 (TB3) is carried on the PDSCH scheduled by the PDCCH (of the PTP).

Further, as illustrated in FIG. 6, the UE2 receives the UE-specific PDCCH of the PTP, and the DCI carried on the UE-specific PDCCH of the PTP contains HPID=1 and NDI=0. Compared with the NDI (NDI=1) of the previous state of the UE2, it can be seen that the NDI of the UE2 is toggled, then the UE2 can determine that the PDSCH scheduled by the UE-specific PDCCH carries initial transmission of new unicast data.

In this case, the UE2 can update the NDI of the UE1 based on the latest received DCI (i.e., the NDI corresponding to HPID#1 of the UE2). That is, the UE2 can toggle the NDI of the UE2, that is, NDI=0, and clear data stored in the cache corresponding to the HPID#1.

For UE3:
The UE3 can receive a group-common PDCCH, a CRC of the group-common PDCCH is scrambled with a G-RNTI, the group-common PDCCH is used to schedule a group-common PDSCH, and data carried on the group-common PDSCH is a TB3.

The group-common PDCCH can carry group-common downlink control information (DCI), and the group-common DCI can contain information fields for an HPID and an NDI. As illustrated in FIG. 6, HPID=1 (which can be denoted as HPID#1) and NDI=0.

Based on at least one of a scrambling mode of the received group-common PDCCH, an HPID in the group-common DCI (carried on the group-common PDCCH), or an NDI in the group-common DCI, the UE3 can determine that data (i.e., TB3) carried on the scheduled PDSCH is new groupcast data initially transmitted.

In this case, after receiving the group-common PDCCH, the UE3 may not adjust its own NDI state. As illustrated in FIG. 6, the previous NDI of UE3 is 0, and after receiving the group-common PDCCH of the PTM1, the NDI is still 0, and data stored in the cache corresponding to the HPID#1 is cleared.

After receiving the PTM1, if the UE3 receives PTP transmission, based on at least one of a scrambling mode of a UE-specific PDCCH in the PTP, an HPID in a UE-specific DCI, or an NDI in the UE-specific DCI, the UE3 can determine that data carried on the scheduled PDSCH is data retransmitted or new data initially transmitted. As illustrated in FIG. 6, the UE3 feeds back NACK, and then receives the UE-specific PDCCH. The DCI carried on the UE-specific PDCCH contains HPID=1 and NDI=0. Through comparison, it can be seen that both the NDI carried on the UE-specific PDCCH and NDI=0 in the previous state of the UE3 are 0. That is to say, the NDI of the UE3 is not toggled. It can be considered that the current PTP is retransmission, but because there is already a transmission of the PTM1 (TB3) before this PTP, the UE3 can determine that the PDSCH scheduled by this PDCCH (of the PTP) carries retransmission of the PTM1 (TB3).

Further, as illustrated in FIG. 6, the UE3 receives the UE-specific PDCCH of the PTP, and the DCI carried on the UE-specific PDCCH of the PTP contains HPID=1 and NDI=1. The NDI carried on the UE-specific PDCCH of the PTP is toggled compared with the NDI (NDI=1) of the previous state of the UE3, then the UE3 can determine that the PDSCH scheduled by the UE-specific PDCCH carries initial transmission of new unicast data.

In this case, the UE3 can update the NDI of the UE1 (that is, the NDI corresponding to HPID#1 of the UE3) based on the latest received DCI. That is, the UE3 can toggle the NDI of the UE3, that is, NDI=1, and clear data stored in the cache corresponding to the HPID#1.

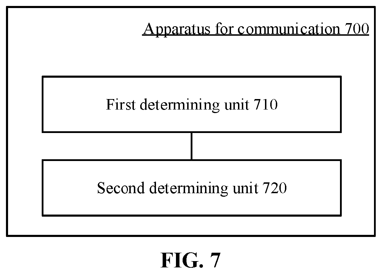

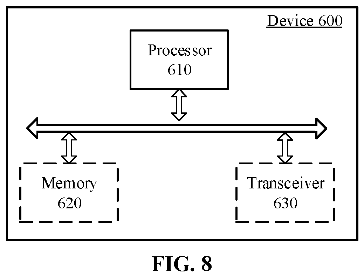

The method embodiments of the present disclosure are described in detail above with reference to FIGS. 4 to 6 and the apparatus embodiments of the present disclosure are described in detail below with reference to FIG. 7 and FIG. 8. It should be understood that the description of the method embodiments and the description of the apparatus embodiments correspond to each other and thus for portions not described in detail, reference may be made to the method embodiment.

FIG. 7 is a structural diagram of an apparatus for communication according to an embodiment of the present disclosure. An apparatus for communication 700 in FIG. 7 includes a first determining unit 710 and a second determining unit 720.

The first determining unit 710 is configured to determine that a first physical downlink control channel (PDCCH) is a group-common physical downlink control channel (GC-PDCCH).

The second determining unit 720 is configured to determine that data carried on a first physical downlink shared channel (PDSCH) scheduled by the first PDCCH is new multicast data initially transmitted.

In an embodiment, the first determining unit 710 is specifically configured to: determine, based on first information, that the first PDCCH is the GC-PDCCH. The first information includes at least one of: a cyclic redundancy check (CRC) of the first PDCCH being scrambled with a group-common radio network temporary identifier (G-RNTI), or an N-bit information field in the first PDCCH indicating that the first PDCCH is the GC-PDCCH, where N is a positive integer.

In an embodiment, the second determining unit 720 is specifically configured to: determine, based on second information, that the data carried on the first PDSCH scheduled by the first PDCCH is the new multicast data initially transmitted. The second information includes at least one of: a cyclic redundancy check (CRC) of the first PDCCH being scrambled with a group-common radio network temporary identifier (G-RNTI), a first hybrid automatic repeat request (HARQ) process identifier (HPID) carried on the first PDCCH, or a first new data indicator (NDI) carried on the first PDCCH.

In an embodiment, the apparatus 700 further includes a clearing unit 730 configured to clear data corresponding to a second HPID stored in a cache to store, in the cache, at least one of the data carried on the first PDSCH or data retransmitted on the first PDSCH. The second HPID is the same with a first HPID, a second PDCCH carries the second HPID, and the second PDCCH is received by the apparatus before the first PDCCH is received by the apparatus.

In an embodiment, the apparatus 700 further includes a comparing unit 740 and a toggling unit 750. The comparing unit 740 is configured to compare a first new data indicator (NDI) carried on the first PDCCH with an NDI of the apparatus. The toggling unit 750 is configured to: in response to the first NDI being different from the NDI of the apparatus, toggle the NDI of the apparatus to make the NDI of the apparatus the same with the first NDI.

In an embodiment, the apparatus 700 also includes a receiving unit 760. The receiving unit 760 is configured to receive a third PDCCH. The third PDCCH is a user equipment (UE)-specific PDCCH, and a third HPID carried on the third PDCCH is the same with a first HPID. The second determining unit 720 is further configured to determine, based on a third NDI carried on the third PDCCH and the first NDI, whether data carried on a third PDSCH scheduled by the third PDCCH is the multicast data retransmitted or new unicast data initially transmitted.

In an embodiment, the second determining unit 720 is specifically configured to: in response to the third NDI being the same with the first NDI, determine that the data carried on the third PDSCH scheduled by the third PDCCH is the retransmission of the multicast; and in response to the third NDI being different from the first NDI, determine that the data carried on the third PDSCH scheduled by the third PDCCH is the initial transmission of the new unicast data.

In an embodiment, when the first PDCCH is the GC-PDCCH, the apparatus does not compare a first new data indicator (NDI) carried on the first PDCCH with an NDI of the apparatus and does not toggle the NDI of the apparatus.

In an embodiment, the apparatus 700 also includes a receiving unit 760. The receiving unit 760 is configured to receive a third PDCCH. The third PDCCH is a user equipment (UE)-specific PDCCH, and a third hybrid automatic repeat request (HARQ) process identifier (HPID) carried on the third PDCCH is the same with a first HPID. The second determining unit 720 is further configured to determine, based on a third NDI carried on the third PDCCH and a second NDI, whether data carried on a third PDSCH scheduled by the third PDCCH is retransmission of the multicast data or initial transmission of new unicast data. A second HPID is the same with the first HPID, a second PDCCH carries the second HPID, and the second PDCCH is received by the apparatus before the first PDCCH is received by the apparatus.

In an embodiment, the second determining unit 720 is specifically configured to: in response to the third NDI being the same with the second NDI carried on the second PDCCH, determine that the data carried on the third PDSCH scheduled by the third PDCCH is the retransmission of the multicast; and in response to the third NDI being different from the second NDI, determine that the data carried on the third PDSCH scheduled by the third PDCCH is the initial transmission of the new unicast data. The second PDCCH is received by the apparatus before the first PDCCH is received by the apparatus, and the second HPID carried on the second PDCCH is the same with the first HPID.

In an embodiment, the apparatus 700 also includes a toggling unit 750 configured to toggle the NDI of the apparatus.

In an embodiment, the apparatus 700 further includes a clearing unit 730 configured to clear data corresponding to the first HPID stored in a cache to store, in the cache, at least one of the data carried on the third PDSCH or data retransmitted on the third PDSCH.

In an embodiment, a cyclic redundancy check (CRC) of the third PDCCH is scrambled with a UE-specific cell radio network temporary identifier (C-RNTI).

In an embodiment, an information field for the first NDI indicates one of: the data carried on the first PDSCH being multicast data or unicast data; enabling or disabling of hybrid automatic repeat request acknowledgement (HARQ-ACK) of the apparatus; the apparatus using an acknowledgement/negative acknowledgement (ACK/NACK) feedback mode or an NACK-only feedback mode; or the apparatus receiving multicast data by using unicast-specific bandwidth part (BWP) or a multicast-specific BWP.

In an embodiment, an information field for the first NDI is used to extend one of following information fields of downlink control information (DCI) carried on the first PDCCH: a frequency domain resource assignment (FDRA) information field, a time domain resource assignment (TDRA) information field, a bandwidth part (BWP) indication information field, or other information fields in the DCI.

In an embodiment, no information field for the first NDI is carried on the first PDCCH.

FIG. 8 is a structural diagram of the apparatus according to the present disclosure. The dotted line in FIG. 5 indicates that the unit or module is optional. The apparatus 600 may be used to implement the methods described in the method embodiments. The apparatus 600 may be a chip or an apparatus for communication.

The apparatus 600 may include one or more processors 610. The processor 610 may support the apparatus 600 to implement the methods described in the method embodiments. The processor 610 may be a general purpose processor or a specific purpose processor. For example, the processor could be a central processing unit (CPU). Alternatively, the processor may also be other general purpose processors, digital signal processors (DSP), application specific integrated circuits (ASIC), field programmable gate arrays (FPGA) or other programmable logic devices, discrete gate or transistor logic devices, discrete hardware components, and the like. The general purpose processor may be a microprocessor or the processor may be any conventional processor or the like.

The apparatus 600 may also include one or more memories 620. The memory 620 stores a program that can be executed by the processor 610 such that the processor 610 performs the methods described in the method embodiments. The memory 620 may be independent of the processor 610 or may be integrated within the processor 610.

The apparatus 600 may also include a transceiver 630. The processor 610 may communicate with other devices or chips through the transceiver 630. For example, the processor 610 may transmit data to other devices or chips through the transceiver 630 or the processor 610 may receive data from other devices or chips through the transceiver 630.

An embodiment of the present disclosure further provides a computer-readable storage medium for storing a program. The computer-readable storage medium may be applied to the apparatus for communication according to the embodiment of the present disclosure, and the program causes a computer to perform the methods performed by the apparatus for communication in various embodiments of the present disclosure.

An embodiment of the present disclosure further provides a computer program product. The computer program product includes a program. The computer program product may be applied to the apparatus for communication according to the embodiment of the present disclosure, and the program causes a computer to perform the methods performed by the apparatus for communication in various embodiments of the present disclosure.

An embodiment of the present disclosure further provides a computer program. The computer program may be applied to the apparatus for communication according to the embodiment of the present disclosure, and the computer program causes a computer to perform the methods performed by the apparatus for communication in various embodiments of the present disclosure.

It should be understood that, in the embodiments of the present disclosure, "B corresponding to A" means that B is associated with A, and B may be determined from A. It should also be understood, however, that determining B from A does not mean determining B from A alone, but may also mean determining B from A and/or other information.

It should be understood that the term "and/or" herein is only an association relationship describing associated objects, which means that there may be three relationships. For example "A and/or B" may have three meanings: A exists alone, A and B exist at the same time and B exists alone. In addition, the character "/" herein generally indicates that the associated objects before and after the character "/" are in an "or" relationship.

It should be understood that in various embodiments of the present disclosure, the size of the sequence number of the above-mentioned processes does not mean the order of execution, and the execution order of various processes should be determined by its function and inherent logic, and should not be limited in any way to the implementation process of the embodiments of the present disclosure.

In the several embodiments provided by the disclosure, it should be understood that the disclosed system, apparatus and method may be implemented in other ways. For example, the apparatus embodiments described above are only illustrative. For example, the division of the units is only the division of logical functions, and there may be other divisions in actual implementation. For example, multiple units or components may be combined or integrated into another system, or some features may be ignored or not implemented. In addition, the displayed or discussed mutual coupling or direct coupling or communication connection may be indirect coupling or communication connection through some interfaces, apparatuses or units, and may be in electrical, mechanical or other forms.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the present embodiments.

In addition, the functional units in each embodiment of the disclosure may be integrated into one processing unit, or each unit may exist separately and physically, or two or more units may be integrated into one unit.

The above-described embodiments may be implemented in whole or in part by software, hardware, firmware or any combination thereof. When implemented in software, the embodiments can be implemented in whole or in part in the form of a computer program product. The computer program product includes one or more computer instructions. When the computer program instructions are loaded and executed on a computer, the processes or functions described in accordance with the embodiments of the present disclosure are generated in whole or in part. The computer may be a general purpose computer, a specific purpose computer, a computer network, or other programmable apparatus. The computer instructions may be stored in a computer-readable storage medium or the computer instructions are transmitted from one computer-readable storage medium to another computer-readable storage medium. For example, the computer instructions may be transmitted from one Web site, computer, server, or data center to another Web site, computer, server, or data center via a wired manner (e.g., coaxial cable, optical fiber, digital subscriber line (DSL)) or a wireless manner (e.g., infrared, wireless, microwave, etc.). The computer-readable storage medium may be any usable medium that the computer can read or a data storage device, such as a server, data center, or the like, that includes one or more usable media integration. The usable medium may be a magnetic medium (e.g., floppy disk, hard disk, magnetic tape), an optical medium (e.g., digital video disc (DVD)), or a semiconductor medium (e.g., solid state disk (SSD)), etc.

## Claims

1. A method for communication, carried by a terminal device, the method comprising:
determining (S420), by the terminal device, that a first physical downlink control channel, PDCCH, is a group-common physical downlink control channel, GC-PDCCH; and
determining (S440), by the terminal device, that data carried on a first physical downlink shared channel, PDSCH, scheduled by the first PDCCH is new multicast data initially transmitted,
wherein the method further comprises: after determining (S420), by the terminal device, that the first PDCCH is the GC-PDCCH,
receiving, by the terminal device, a third PDCCH, wherein the third PDCCH is a user equipment, UE-specific PDCCH, and a third hybrid automatic repeat request, HARQ, process identifier, HPID, carried on the third PDCCH is the same with a first HPID; and
determining, by the terminal device based on a third NDI carried on the third PDCCH and a first NDI, whether data carried on a third PDSCH scheduled by the third PDCCH is the multicast data retransmitted or new unicast data initially transmitted.

2. The method of claim 1, wherein determining (S420), by the terminal device, that the first PDCCH is the GC-PDCCH comprises:
determining, by the terminal device based on first information, that the first PDCCH is the GC-PDCCH,
wherein the first information comprises at least one of:
a cyclic redundancy check, CRC, of the first PDCCH is scrambled with a group-common radio network temporary identifier, G-RNTI; or
an N-bit information field in the first PDCCH indicates that the first PDCCH is the GC-PDCCH, wherein N is a positive integer.

3. The method of claim 1 or 2, wherein determining (S440), by the terminal device, that the data carried on the first PDSCH scheduled by the first PDCCH is the new multicast data initially transmitted comprises:
determining, by the terminal device based on second information, that the data carried on the first PDSCH scheduled by the first PDCCH is the new multicast data initially transmitted,
wherein the second information comprises at least one of:
a cyclic redundancy check, CRC, of the first PDCCH is scrambled with a group-common radio network temporary identifier, G-RNTI;
a first hybrid automatic repeat request, HARQ, process identifier, HPID, carried on the first PDCCH; or
a first new data indicator, NDI, carried on the first PDCCH.

4. The method of any one of claims 1 to 3, further comprising: after determining (S420), by the terminal device, that the first PDCCH is the GC-PDCCH,
clearing, by the terminal device, data corresponding to a second hybrid automatic repeat request, HARQ, process identifier, HPID, stored in a cache to store, in the cache, at least one of the data carried on the first PDSCH or data retransmitted on the first PDSCH, wherein the second HPID is the same with a first HPID, a second PDCCH carries the second HPID, and the second PDCCH is received by the terminal device before the first PDCCH is received by the terminal device.

5. The method of any one of claims 1 to 4, further comprising: after determining (S420), by the terminal device, that the first PDCCH is the GC-PDCCH,
comparing, by the terminal device, a first new data indicator, NDI, carried on the first PDCCH with an NDI of the terminal device; and
in response to the first NDI being different from the NDI of the terminal device, toggling, by the terminal device, the NDI of the terminal device to make the NDI of the terminal device the same with the first NDI.

6. The method of claim 1, wherein determining, by the terminal device based on the third NDI carried on the third PDCCH and the first NDI, whether the data carried on the third PDSCH scheduled by the third PDCCH is the multicast data retransmitted or the new unicast data initially transmitted comprises:
in response to the third NDI being the same with the first NDI, determining, by the terminal device, that the data carried on the third PDSCH scheduled by the third PDCCH is the multicast data retransmitted; and
in response to the third NDI being different from the first NDI, determining, by the terminal device, that the data carried on the third PDSCH scheduled by the third PDCCH is the new unicast data initially transmitted.

7. A terminal apparatus for communication (700), comprising:
a first determining unit (710), configured to determine that a first physical downlink control channel, PDCCH, is a group-common physical downlink control channel, GC-PDCCH; and
a second determining unit (720), configured to determine that data carried on a first physical downlink shared channel, PDSCH, scheduled by the first PDCCH is new multicast data initially transmitted,
wherein the apparatus further comprises:
a receiving unit, configured to receive a third PDCCH, wherein the third PDCCH is a user equipment, UE,-specific PDCCH, and a third hybrid automatic repeat request, HARQ, process identifier, HPID, carried on the third PDCCH is the same with a first HPID; and
wherein the second determining unit (720) is further configured to determine, based on a third NDI carried on the third PDCCH and a first NDI, whether data carried on a third PDSCH scheduled by the third PDCCH is the multicast data retransmitted or new unicast data initially transmitted.

8. The apparatus of claim 7, wherein the first determining unit (710) is specifically configured to:
determine, based on first information, that the first PDCCH is the GC-PDCCH, wherein the first information comprises at least one of:
a cyclic redundancy check, CRC, of the first PDCCH is scrambled with a group-common radio network temporary identifier, G-RNTI; or
an N-bit information field in the first PDCCH indicates that the first PDCCH is the GC-PDCCH, wherein N is a positive integer.

9. The apparatus of claim 7 or 8, wherein the second determining unit (720) is specifically configured to:
determine, based on second information, that the data carried on the first PDSCH scheduled by the first PDCCH is the new multicast data initially transmitted, wherein the second information comprises at least one of:
a cyclic redundancy check, CRC, of the first PDCCH is scrambled with a group-common radio network temporary identifier, G-RNTI;
a first hybrid automatic repeat request, HARQ, process identifier, HPID, carried on the first PDCCH; or
a first new data indicator, NDI, carried on the first PDCCH.

10. The apparatus of any one of claims 7 to 9, further comprising: a clearing unit, configured to:
clear data corresponding to a second hybrid automatic repeat request, HARQ, process identifier, HPID, stored in a cache to store, in the cache, at least one of the data carried on the first PDSCH or data retransmitted on the first PDSCH, wherein the second HPID is the same with a first HPID, a second PDCCH carries the second HPID, and the second PDCCH is received by the apparatus before the first PDCCH is received by the apparatus.

11. The apparatus of any one of claims 7 to 10, further comprising:
a comparing unit, configured to compare a first new data indicator, NDI, carried on the first PDCCH with an NDI of the apparatus; and
a toggling unit, configured to: in response to the first NDI being different from the NDI of the apparatus, toggle the NDI of the apparatus to make the NDI of the apparatus the same with the first NDI.

12. The apparatus of claim 7, wherein the second determining unit (720) is specifically configured to:
in response to the third NDI being the same with the first NDI, determine that the data carried on the third PDSCH scheduled by the third PDCCH is the multicast data retransmitted; and
in response to the third NDI being different from the first NDI, determine that the data carried on the third PDSCH scheduled by the third PDCCH is the new unicast data initially transmitted.

13. A chip comprising a processor configured to invoke a program from a memory to cause a device installed with the chip to perform the method of any one of claims 1 to 6.

## Patentansprüche

1. Verfahren zur Kommunikation, das von einer Endgerätevorrichtung durchgeführt wird, wobei das Verfahren Folgendes umfasst:
Bestimmen (S420) durch die Endgerätevorrichtung, dass ein erster physikalischer Downlink-Steuerkanal, PDCCH, ein gruppengemeinsamer physikalischer Downlink-Steuerkanal, GC-PDCCH, ist; und
Bestimmen (S440) durch die Endgerätevorrichtung, dass Daten, die auf einem durch den ersten PDCCH disponierten ersten gemeinsamen physikalischen Downlink-Kanal, PDSCH, befördert werden, anfänglich übertragene neue Multicast-Daten sind,
wobei das Verfahren ferner Folgendes umfasst: nach dem Bestimmen (S420) durch die Endgerätevorrichtung, dass der erste PDCCH der GC-PDCCH ist,
Empfangen eines dritten PDCCH durch die Endgerätevorrichtung, wobei der dritte PDCCH ein benutzereinrichtungsspezifischer, UE-spezifischer, PDCCH, ist, und eine dritte Kennung, HPID, eines Prozesses einer hybriden automatischen Wiederholungsanforderung, HARQ, die auf dem dritten PDCCH befördert wird, gleich wie eine erste HPID ist; and
Bestimmen durch die Endgerätevorrichtung basierend auf einem dritten NDI, der auf dem dritten PDCCH befördert wird, und einem ersten NDI, ob Daten, die auf einem durch den dritten PDCCH disponierten dritten PDSCH befördert werden, die neu übertragenen Multicast-Daten oder anfänglich übertragene neue Unicast-Daten sind.

2. Verfahren nach Anspruch 1, wobei das Bestimmen (S420) durch die Endgerätevorrichtung, dass der erste PDCCH der GC-PDCCH ist, Folgendes umfasst:
Bestimmen durch die Endgerätevorrichtung basierend auf ersten Informationen, dass der erste PDCCH der GC-PDCCH ist,
wobei die ersten Informationen mindestens eines von Folgendem umfassen:
eine zyklische Redundanzprüfung, CRC, des ersten PDCCH, die mit einer gruppengemeinsamen temporären Funknetzwerkkennung, G-RNTI, verwürfelt ist; oder
ein N-Bit-Informationsfeld in dem ersten PDCCH, das anzeigt, dass der erste PDCCH der GC-PDCCH ist, wobei N eine positive ganze Zahl ist.

3. Verfahren nach Anspruch 1 oder 2, wobei das Bestimmen (S440) durch die Endgerätevorrichtung, dass die Daten, die auf dem durch den ersten PDCCH disponierten ersten PDSCH befördert werden, die anfänglich übertragenen neuen Multicast-Daten sind, Folgendes umfasst:
Bestimmen durch die Endgerätevorrichtung basierend auf zweiten Informationen, dass die Daten, die auf dem durch den ersten PDCCH disponierten ersten PDSCH befördert werden, die anfänglich übertragenen neuen Multicast-Daten sind,
wobei die zweiten Informationen mindestens eines von Folgendem umfassen:
eine zyklische Redundanzprüfung, CRC, des ersten PDCCH, die mit einer gruppengemeinsamen temporären Funknetzwerkkennung, G-RNTI, verwürfelt ist;
eine erste Kennung, HPID, eines Prozesses einer hybriden automatischen Wiederholungsanforderung, HARQ, die auf dem ersten PDCCH befördert wird; oder
einen ersten Indikator neuer Daten, NDI, der auf dem ersten PDCCH befördert wird.

4. Verfahren nach einem der Ansprüche 1 bis 3, ferner umfassend: nach dem Bestimmen (S420) durch die Endgerätevorrichtung, dass der erste PDCCH der GC-PDCCH ist,
Löschen von Daten, die einer zweiten Kennung, HPID, eines Prozesses einer automatischen Wiederholungsanforderung, HARQ, entsprechen, die in einem Cache gespeichert ist, durch die Endgerätevorrichtung, um mindestens eines von den auf dem ersten PDSCH beförderten Daten oder den auf dem ersten PDSCH neu übertragenen Daten in dem Cache zu speichern, wobei die zweite HPID gleich wie eine erste HPID ist, ein zweiter PDCCH die zweite HPID befördert und der zweite PDCCH durch die Endgerätevorrichtung empfangen wird, bevor der erste PDCCH durch die Endgerätevorrichtung empfangen wird.

5. Verfahren nach einem der Ansprüche 1 bis 4, ferner umfassend: nach dem Bestimmen (S420) durch die Endgerätevorrichtung, dass der erste PDCCH der GC-PDCCH ist,
Vergleichen eines ersten Indikators neuer Daten, NDI, der auf dem ersten PDCCH befördert wird, durch die Endgerätevorrichtung mit einem NDI der Endgerätevorrichtung; und
in Reaktion darauf, dass sich der erste NDI von dem NDI der Endgerätevorrichtung unterscheidet, Wechseln des NDI der Endgerätevorrichtung, um den NDI der Endgerätevorrichtung mit dem ersten NDI gleich zu setzen.

6. Verfahren nach Anspruch 1, wobei das Bestimmen durch die Endgerätevorrichtung basierend auf dem dritten NDI, der auf dem dritten PDCCH befördert wird, und dem ersten NDI, ob Daten, die auf dem durch den dritten PDCCH disponierten dritten PDSCH befördert werden, die neu übertragenen Multicast-Daten oder die anfänglich übertragenen neuen Unicast-Daten sind, Folgendes umfasst:
in Reaktion darauf, dass der dritte NDI gleich wie der erste NDI ist, Bestimmen durch die Endgerätevorrichtung, dass die Daten, die auf dem durch den dritten PDCCH disponierten dritten PDSCH befördert werden, die neu übertragenen Multicast-Daten sind; und
in Reaktion darauf, dass sich der dritte NDI von dem ersten NDI unterscheidet, Bestimmen durch die Endgerätevorrichtung, dass die Daten, die auf dem durch den dritten PDCCH disponierten dritten PDSCH befördert werden, die anfänglich übertragenen neuen Unicast-Daten sind.

7. Endgeräteeinrichtung zur Kommunikation (700), umfassend:
eine erste Bestimmungseinheit (710), die dazu ausgelegt ist, zu bestimmen, dass ein erster physikalischer Downlink-Steuerkanal, PDCCH, ein gruppengemeinsamer physikalischer Downlink-Steuerkanal, GC-PDCCH, ist; und
eine zweite Bestimmungseinheit (720), die dazu ausgelegt ist, zu bestimmen, dass Daten, die auf einem durch den ersten PDCCH disponierten ersten gemeinsamen physikalischen Downlink-Kanal, PDSCH, befördert werden, anfänglich übertragene neue Multicast-Daten sind,
wobei die Vorrichtung ferner Folgendes umfasst:
eine Empfangseinheit, die dazu ausgelegt ist, einen dritten PDCCH zu empfangen, wobei der dritte PDCCH ein benutzereinrichtungsspezifischer, UE-spezifischer, PDCCH, ist, und eine dritte Kennung, HPID, eines Prozesses einer hybriden automatischen Wiederholungsanforderung, HARQ, die auf dem dritten PDCCH befördert wird, gleich wie eine erste HPID ist; and
wobei die zweite Bestimmungseinheit (720) ferner dazu ausgelegt ist, basierend auf einem dritten NDI, der auf dem dritten PDCCH befördert wird, und einem ersten NDI zu bestimmen, ob Daten, die auf einem durch den dritten PDCCH disponierten dritten PDSCH befördert werden, die neu übertragenen Multicast-Daten oder anfänglich übertragene neue Unicast-Daten sind.

8. Einrichtung nach Anspruch 7, wobei die erste Bestimmungseinheit (710) insbesondere zu Folgendem ausgelegt ist:
Bestimmen basierend auf ersten Informationen, dass der erste PDCCH der GC-PDCCH ist, wobei die ersten Informationen mindestens eines von Folgendem umfassen:
eine zyklische Redundanzprüfung, CRC, des ersten PDCCH, die mit einer gruppengemeinsamen temporären Funknetzwerkkennung, G-RNTI, verwürfelt ist; oder
ein N-Bit-Informationsfeld in dem ersten PDCCH, das anzeigt, dass der erste PDCCH der GC-PDCCH ist, wobei N eine positive ganze Zahl ist.

9. Einrichtung nach Anspruch 7 oder 8, wobei die zweite Bestimmungseinheit (720) insbesondere zu Folgendem ausgelegt ist:
Bestimmen basierend auf zweiten Informationen, dass die Daten, die auf dem durch den ersten PDCCH disponierten ersten PDSCH befördert werden, die anfänglich übertragenen neuen Multicast-Daten sind, wobei die zweiten Informationen mindestens eines von Folgendem umfassen:
eine zyklische Redundanzprüfung, CRC, des ersten PDCCH, die mit einer gruppengemeinsamen temporären Funknetzwerkkennung, G-RNTI, verwürfelt ist;
eine erste Kennung, HPID, eines Prozesses einer hybriden automatischen Wiederholungsanforderung, HARQ, die auf dem ersten PDCCH befördert wird; oder
einen ersten Indikator neuer Daten, NDI, der auf dem ersten PDCCH befördert wird.

10. Einrichtung nach einem der Ansprüche 7 bis 9, ferner umfassend: eine Löscheinheit, die zu Folgendem ausgelegt ist:
Löschen von Daten, die einer zweiten Kennung, HPID, eines Prozesses einer automatischen Wiederholungsanforderung, HARQ, entsprechen, die in einem Cache gespeichert ist, um mindestens eines von den auf dem ersten PDSCH beförderten Daten oder den auf dem ersten PDSCH neu übertragenen Daten in dem Cache zu speichern, wobei die zweite HPID gleich wie eine erste HPID ist, ein zweiter PDCCH die zweite HPID befördert und der zweite PDCCH durch die Einrichtung empfangen wird, bevor der erste PDCCH durch die Einrichtung empfangen wird.

11. Einrichtung nach einem der Ansprüche 7 bis 10, ferner umfassend:
eine Vergleichseinheit, die dazu ausgelegt ist, einen auf dem ersten PDCCH beförderten ersten Indikator neuer Daten, NDI, mit einem NDI der Einrichtung zu vergleichen; und
eine Wechseleinheit, die zu Folgendem ausgelegt ist: in Reaktion darauf, dass sich der erste NDI von dem NDI der Einrichtung unterscheidet, Wechseln des NDI der Einrichtung, um den NDI der Einrichtung mit dem ersten NDI gleich zu setzen.

12. Einrichtung nach Anspruch 7, wobei die zweite Bestimmungseinheit (720) insbesondere zu Folgendem ausgelegt ist:
in Reaktion darauf, dass der dritte NDI gleich wie der erste NDI ist, Bestimmen, dass die Daten, die auf dem durch den dritten PDCCH disponierten dritten PDSCH befördert werden, die neu übertragenen Multicast-Daten sind; und
in Reaktion darauf, dass sich der dritte NDI von dem ersten NDI unterscheidet, Bestimmen, dass die Daten, die auf dem durch den dritten PDCCH disponierten dritten PDSCH befördert werden, die anfänglich übertragenen neuen Unicast-Daten sind.

13. Chip, umfassend einen Prozessor, der dazu ausgelegt ist, ein Programm aus einem Speicher aufzurufen, um eine Vorrichtung, auf der der Chip installiert ist, zum Durchführen des Verfahrens nach einem der Ansprüche 1 bis 6 zu veranlassen.

## Revendications

1. Procédé de communication, mis en œuvre par un dispositif terminal, le procédé comprenant :
la détermination (S420), par le dispositif terminal, qu'un premier canal de commande de liaison descendante physique, PDCCH, est un canal de commande de liaison descendante physique de groupe-commun, GC-PDCCH, et
la détermination (S440), par le dispositif terminal, que des données transportées sur un premier canal partagé de liaison descendante physique, PDSCH, planifié par le premier PDCCH sont de nouvelles données de multidiffusion transmises initialement,
le procédé comprenant en outre : après la détermination (S420), par le dispositif terminal, que le premier PDCCH est le GC-PDCCH,
la réception, par le dispositif terminal, d'un troisième PDCCH, le troisième PDCCH étant un équipement utilisateur, PDCCH, spécifique UE, et un troisième identifiant de processus de demande de répétition automatique hybride, HARQ, HPID, transporté sur le troisième PDCCH étant identique à un premier HPID ; et
la détermination, par le dispositif terminal sur la base d'un troisième NDI transporté sur le troisième PDCCH et d'un premier NDI, si des données transportées sur un troisième PDSCH planifié par le troisième PDCCH sont les données de multidiffusion retransmises ou de nouvelles données de monodiffusion transmises initialement.

2. Procédé selon la revendication 1, la détermination (S420), par le dispositif terminal, que le premier PDCCH est le GC-PDCCH comprenant :
la détermination, par le dispositif terminal sur la base de premières informations, que le premier PDCCH est le GC-PDCCH,
les premières informations comprenant au moins l'un de :
une vérification de redondance cyclique, CRC, du premier PDCCH étant brouillée avec un identifiant temporaire de réseau radio de groupe-commun, G-RNTI, ou
un champ d'informations de N-bits dans le premier PDCCH indiquant que le premier PDCCH est le GC-PDCCH, N étant un entier positif.

3. Procédé selon la revendication 1 ou 2, la détermination (S440), par le dispositif terminal, que les données transportées sur le premier PDSCH planifié par le premier PDCCH sont les nouvelles données de multidiffusion transmises initialement comprenant :
la détermination, par le dispositif terminal sur la base de secondes informations, que les données transportées sur le premier PDSCH planifié par le premier PDCCH sont les nouvelles données de multidiffusion transmises initialement,
les secondes informations comprenant au moins l'un de :
une vérification de redondance cyclique, CRC, du premier PDCCH étant brouillée avec un identifiant temporaire de réseau radio de groupe-commun, G-RNTI ;
un premier identifiant de processus de demande de répétition automatique hybride, HARQ, HPID, transporté sur le premier PDCCH ; ou
un premier nouvel indicateur de données, NDI, transporté sur le premier PDCCH.

4. Procédé selon l'une quelconque des revendications 1 à 3, comprenant en outre : après la détermination (S420), par le dispositif terminal, que le premier PDCCH est le GC-PDCCH,
l'effacement, par le dispositif terminal, de données correspondant à un deuxième identifiant de processus de demande de répétition automatique hybride, HARQ, HPID, stockées dans un cache pour stocker, dans le cache, au moins l'une des données transportées sur le premier PDSCH ou des données retransmises sur le premier PDSCH, le second HPID étant identique à un premier HPID, un deuxième PDCCH transportant le second HPID, et le deuxième PDCCH étant reçu par le dispositif terminal avant que le premier PDCCH ne soit reçu par le dispositif terminal.

5. Procédé selon l'une quelconque des revendications 1 à 4, comprenant en outre : après la détermination (S420), par le dispositif terminal, que le premier PDCCH est le GC-PDCCH,
la comparaison, par le dispositif terminal, d'un premier nouvel indicateur de données, NDI, transporté sur le premier PDCCH avec un NDI du dispositif terminal ; et
en réponse au premier NDI étant différent du NDI du dispositif terminal, la commutation, par le dispositif terminal, du NDI du dispositif terminal pour rendre le NDI du dispositif terminal identique au premier NDI.

6. Procédé selon la revendication 1, la détermination, par le dispositif terminal sur la base du troisième NDI transporté sur le troisième PDCCH et du premier NDI, si les données transportées sur le troisième PDSCH planifié par le troisième PDCCH sont les données de multidiffusion retransmises ou les nouvelles données de monodiffusion transmises initialement comprenant :
en réponse au troisième NDI étant identique au premier NDI, la détermination, par le dispositif terminal, que les données transportées sur le troisième PDSCH planifié par le troisième PDCCH sont les données de multidiffusion retransmises ; et
en réponse au troisième NDI étant différent du premier NDI, la détermination, par le dispositif terminal, que les données transportées sur le troisième PDSCH planifié par le troisième PDCCH sont les nouvelles données de monodiffusion transmises initialement.

7. Appareil terminal de communication (700), comprenant :
une première unité de détermination (710), configurée pour déterminer qu'un premier canal de commande de liaison descendante physique, PDCCH, est un canal de commande de liaison descendante physique de groupe-commun, GC-PDCCH ; et
une seconde unité de détermination (720), configurée pour déterminer que des données transportées sur un premier canal partagé de liaison descendante physique, PDSCH, planifié par le premier PDCCH sont de nouvelles données de multidiffusion transmises initialement,
l'appareil comprenant en outre :
une unité de réception, configurée pour recevoir un troisième PDCCH, le troisième PDCCH étant un équipement utilisateur, PDCCH, spécifique UE, et un troisième identifiant de processus de demande de répétition automatique hybride, HARQ, HPID, transporté sur le troisième PDCCH étant identique à un premier HPID ; et
la seconde unité de détermination (720) étant en outre configurée pour déterminer, sur la base d'un troisième NDI transporté sur le troisième PDCCH et d'un premier NDI, si des données transportées sur un troisième PDSCH planifié par le troisième PDCCH sont les données de multidiffusion retransmises ou de nouvelles données de monodiffusion transmises initialement.

8. Appareil selon la revendication 7, la première unité de détermination (710) étant spécifiquement configurée pour :
déterminer, sur la base de premières informations, que le premier PDCCH est le GC-PDCCH, les premières informations comprenant au moins l'un de :
une vérification de redondance cyclique, CRC, du premier PDCCH étant brouillée avec un identifiant temporaire de réseau radio de groupe-commun, G-RNTI ; ou
un champ d'informations de N-bits dans le premier PDCCH indiquant que le premier PDCCH est le GC-PDCCH, N étant un entier positif.

9. Appareil selon la revendication 7 ou 8, la seconde unité de détermination (720) étant spécifiquement configurée pour :
déterminer, sur la base de secondes informations, que les données transportées sur le premier PDSCH planifié par le premier PDCCH sont les nouvelles données de multidiffusion transmises initialement, les secondes informations comprenant au moins l'un de :
une vérification de redondance cyclique, CRC, du premier PDCCH étant brouillée avec un identifiant temporaire de réseau radio de groupe-commun, G-RNTI ;
un premier identifiant de processus de demande de répétition automatique hybride, HARQ, HPID, transporté sur le premier PDCCH ; ou
un premier nouvel indicateur de données, NDI, transporté sur le premier PDCCH.

10. Appareil selon l'une quelconque des revendications 7 à 9, comprenant en outre : une unité d'effacement, configurée pour :
effacer des données correspondant à un deuxième identifiant de processus de demande de répétition automatique hybride, HARQ, HPID, stockées dans un cache pour stocker, dans le cache, au moins l'une des données transportées sur le premier PDSCH ou des données retransmises sur le premier PDSCH, le second HPID étant identique à un premier HPID, un deuxième PDCCH transportant le second HPID, et le deuxième PDCCH étant reçu par l'appareil avant que le premier PDCCH ne soit reçu par l'appareil.

11. Appareil selon l'une quelconque des revendications 7 à 10, comprenant en outre :
une unité de comparaison, configurée pour comparer un premier nouvel indicateur de données, NDI, transporté sur le premier PDCCH avec un NDI de l'appareil ; et
une unité de commutation, configurée pour : en réponse au premier NDI étant différent du NDI de l'appareil, commuter le NDI de l'appareil pour rendre le NDI de l'appareil identique au premier NDI.

12. Appareil selon la revendication 7, la seconde unité de détermination (720) étant spécifiquement configurée pour :
en réponse au troisième NDI étant identique au premier NDI, déterminer que les données transportées sur le troisième PDSCH planifié par le troisième PDCCH sont les données de multidiffusion retransmises ; et
en réponse au troisième NDI étant différent du premier NDI, déterminer que les données transportées sur le troisième PDSCH planifié par le troisième PDCCH sont les nouvelles données de monodiffusion transmises initialement.

13. Puce comprenant un processeur configuré pour appeler un programme depuis une mémoire pour amener un dispositif installé avec la puce à réaliser le procédé selon l'une quelconque des revendications 1 à 6.
